# EUROPEAN PATENT APPLICATION

(11) **EP 2 151 296 A1**
(43) Date of publication of application: **10.02.2010**
(21) Application number: 08764693.1
(22) Date of filing: 26.05.2008
(51) Int. Cl.: B23K 9/23, B23K 9/025, B23K 9/235, B23K 35/30, B23K 101/06, B23K 103/04, C22C 38/00, C22C 38/58

(54) **UOE STEEL PIPE AND METHOD FOR PRODUCTION THEREOF**

(30) Priority: 25.05.2007 JP 2007139397
(71) Applicant: Sumitomo Metal Industries, Ltd., Osaka 541-0041 (JP)
(72) Inventor: FUKUBA, Tetsuya, Osaka-shi Osaka 541-0041 (JP)
(74) Representative: Jackson, Martin Peter
(86) International application number: PCT/JP2008/059660
(87) International publication number: WO 2008/146791

(57) **Abstract**

A UOE steel pipe which has a tensile strength of at least 900 MPa, which does not develop delayed hydrogen cracking of a weld or fracture of the weld during pipe expansion, and which has a weld and a heat affected zone having excellent toughness is provided. The tensile strength of a weld formed on a base metal having a tensile strength of at least 900 MPa is adjusted to be in the range of 95 - 110 % of the tensile strength of the base metal, the oxygen content of the weld metal in the weld is made at most 0.035 mass %, and the weld is preheated to the range of 75 - 250° C before carrying out welding from the outer side.

## Description

### Technical Field

This invention relates to a high strength UOE steel pipe having a tensile strength of at least 900 MPa and a method for its manufacture.

### Background Art

A UOE steel pipe is manufactured by forming a steel plate having a thickness of around 6 - 40 mm into an open pipe using a UO press, then welding the abutting end portions of the open pipe by submerged arc welding to form a longitudinal weld (referred to in this description simply as a weld), and then after welding, performing a pipe expansion step with the object of straightening the pipe and removing residual stresses.

The weld of a UOE steel pipe is normally formed by welding a total of two layers including one layer on the inner side and one layer on the outer side of the pipe.

Such a UOE steel pipe is primarily used as piping for long distance transport of fluids such as petroleum and gas.

At present, the principal grade of UOE steel pipes is API (American Petroleum Institute) X65 grade. In order to decrease transport costs by increasing the transport pressure and reducing construction costs at the time of pipe installation, there is a demand for further increases in the strength and decreases in the wall thickness of UOE steel pipe.

In recent years, UOE steel pipe of X 120 grade having a tensile strength of at least 900 MPa (referred to below as high strength UOE steel pipe) is being investigated.

This high strength UOE steel pipe has a strength which reaches nearly twice that of conventional pipe. Therefore, it has various problems not only with respect to its performance such as securement of the strength and toughness of the base metal and of the welds but also with respect to its manufacture.

One of the problems which occur at the time of manufacture of a high strength UOE steel pipe is delayed hydrogen cracking which develops in welds. As the strength of a steel pipe increases, it becomes desirable to increase the strength of welds in accordance with the increase in strength of the base metal. However, if the strength of a weld is made too high, the susceptibility of the weld to cracking increases, and delayed hydrogen cracking occurs. If the strength of a weld is decreased, the occurrence of delayed hydrogen cracking is suppressed, but if the strength is decreased too much, the weld fractures during pipe expansion after welding. Thus, in the manufacture of a high strength UOE steel pipe, preventing fracture during pipe expansion and preventing delayed hydrogen cracking are mutually opposed goals, and solving this problem is a manufacturing challenge.

In the past, in Patent Document 1, for example, an invention was disclosed which prevents the occurrence of delayed hydrogen cracking by limiting the oxygen content of a weld to at least 0.035 % to at most 0.050 % (in this specification, unless otherwise specified, % with respect to a composition means mass %) and decreases susceptibility of welds to cracking by hydrogen.

Patent Document 1: JP 10-306348 Al

### Disclosure of Invention

However, in the invention disclosed in Patent Document 1, increasing the oxygen content of a weld not only does decreases the toughness of weld but also may increase the occurrence of weld defects, such as an increase in blow holes or slag inclusion.

The object of the present invention is to provide a method of manufacturing a UOE steel pipe having a high strength of at least 900 MPa and having welds and heat affected zones with excellent toughness without delayed hydrogen cracking in welds or fracture during pipe expansion. It is another object to provide a UOE steel pipe which is manufactured by this method.

In contrast to the consideration in Patent Document 1, the present inventors focused on decreasing the oxygen content of weld metal in order to improve the low temperature toughness of welds. At the same time, it is necessary to impede the occurrence of hydrogen cracking. Upon investigating the cause of hydrogen cracking, it was found that preheating treatment of welds promotes the evolution of hydrogen, thereby making it possible to prevent effectively the occurrence of delayed hydrogen cracking caused by decreasing the oxygen content in weld metal.

Based on such knowledge, a method of manufacturing a high strength UOE steel pipe which can simultaneously prevent fracture during a pipe expansion step and prevent delayed hydrogen cracking was completed.

Namely, the present invention is a method of manufacturing a UOE steel pipe comprising press forming a base metal steel plate so as to form an open pipe, welding the abutting end portions of the open pipe initially from the inner side and then from the outer side, and subjecting the resulting welded pipe to pipe expansion, **characterized in that** a steel plate with a tensile strength of at least 900 MPa is used as the base metal steel pipe, the weld obtained by welding from the inner side is preheated to a temperature of 75 - 250° C before it is welded from the outer side, and the weld obtained by welding from the inner and outer sides is made to have a tensile strength which is 95 - 110 % of the tensile strength of the base metal and an oxygen content of at most 0.035 mass %.

From another aspect, the present invention is a UOE steel pipe which is manufactured by the above-described method, **characterized in that** the tensile strength of the base metal is at least 900 MPa, the tensile strength of the weld is in the range of 95 - 110 % of the tensile strength of the base metal, and the oxygen content of the weld is at most 0.035 mass %.

According to the present invention, a high strength UOE steel pipe which has a weld and a heat affected zone of excellent toughness, which has a tensile strength of at least 900 MPa, and which does not experience delayed hydrogen cracking of the weld or fracture during pipe expansion is provided as well as a method for its manufacture.

### Best Mode for Carrying Out the Invention

Embodiments of the present invention will be explained in detail.

In the present invention, the composition of a base metal steel plate for a high strength UOE steel pipe having a tensile strength of at least 900 MPa does not need to be limited to a specific composition. Any composition known as a composition of a high strength UOE steel pipe can be employed.

An example of a steel composition in a preferred embodiment of the present invention consists essentially of C: at least 0.02 % and at most 0.12 %, Si: at most 0.35 %, Mn: at least 0.5 % and at most 2.0 %, Ni: at least 0.02 % and at most 4 %, at least one of Cr and Mo in a total amount of at least 0.1 % and at most 4 %, optionally Cu: at most 1.50 % and/or at least one of Al, Ti, Nb, V, and B in a total amount of at most 1 %, and a remainder of Fe and impurities (including P: at most 0.04 % and S: at most 0.03 %). The reasons for the limits on the listed elements are as follows.

### C:

It is possible to inexpensively increase strength by adding at least 0.02 % of C. If the C content exceeds 0.12 %, martensite-austenite constituent develops in the heat affected zones at the time of welding, and the toughness of welds decreases. In the examples of the present invention, the C content is at least 0.02 % and at most 0.12 %. Preferably, it is at least 0.03 % and at most 0.06 %.

### Si:

If Si is contained in excess of 0.35 %, martensite-austenite constituent easily develops in the heat affected zone at the time of welding. Therefore, the S content is at most 0.35 %. Preferably it is at most 0.15 %.

### Mn:

The addition of at least 0.5 % of Mn increases hardenability, leading to an increased strength and toughness. However, if the Mn content exceeds 2.2 %, manufacturing problems such as cracks of an ingot develop. Therefore, the Mn content is at least 0.5 % and at most 2.2 %. Preferably it is at least 0.6 % and at most 2.0 %.

### Ni:

Like Mn, the addition of at least 0.02 % of Ni contributes to strength and toughness. However, Ni is an expensive element, and if the Ni content exceeds 4 %, manufacturing costs increase. Therefore, the Ni content is at least 0.02 % and at most 4 %. Preferably it is at least 0.3 % and at most 1.0 %.

### Cr and/or Mo:

Cr and Mo are also useful for increasing strength and toughness, but if too much thereof is added, the toughness of heat affected zones decreases. Therefore, one or both of Cr and Mo is added in a total amount of at least 0.1 % and at most 4 %.

### Cu:

Cu is an element which is also effective at increasing strength and toughness, so it can be added if necessary. However, if it is added in excess of 1.5 %, problems such as surface cracks develop at the time of producing a slab.
Therefore, its upper limit is 1.5 %. Preferably it is at most 1.0 %.

In the present invention, one or more of Al, Ti, Nb, V, and B in a total amount of at most 1 % may be added as optional elements for increasing strength and toughness.

The remainder other than the above-described elements is Fe and impurities. In particular, P and S are both impurities which are unavoidably incorporated during the melting stage. In view of a considerable increase in manufacturing costs involved in reduction of the contents of these elements to extremely low levels and in order to guarantee toughness, the P content is at most 0.04 % and the S content is at most 0.03 %.

Next, a method of manufacturing a high strength UOE steel pipe according to the present invention will be explained.

A thick steel plate normally having a thickness of around 6-40 mm is used as a starting material. After both ends in the widthwise direction of the steel plate undergo beveling, the plate undergoes press forming in a C press, a U press, and a O press to form an open pipe.

The abutting portions at both ends in the widthwise direction of the steel plate are then tack welded by gas shielded arc welding, and one layer of submerged arc welding is carried out from the inner side. Subsequently, at least a region including both ends, namely, the weld formed by welding from the inner side is preheated to a predetermined temperature, and one layer of submerged arc welding is then carried out from the outer side.

For the purposes of pipe straightening and removal of residual stresses, the resulting welded steel pipe is subjected to pipe expansion in which plastic deformation on the order of 1 % elongation in the circumferential direction is normally applied to the pipe over its entire length to manufacture a UOE steel pipe. The pipe expansion step can be carried out by mechanical pipe expansion or hydraulic pipe expansion, and there is no particular limitation on this step in the present invention whichever method is used.

Methods of manufacturing a UOE steel pipe are well known in the art, and in the present invention, pipe manufacture may be carried out according to such conventional methods with no particular limitations except concerning the following points.

According to the present invention, prior to pipe expansion, the weld has a tensile strength which is in the range of at least 95 % to at most 110 % of the tensile strength of the base metal and the oxygen content of the weld metal in the weld is at most 0.035 %.

If the tensile strength of the weld is less than 95 % of the tensile strength of the base metal, fracture may occur at the time of pipe expansion, whereas if it exceeds 110 % of the tensile strength of the base metal, susceptibility of the weld to cracking increases and delayed hydrogen cracking may occur.

The oxygen content of the weld metal of a weld greatly affects the toughness of the weld. If the oxygen content of the weld metal exceeds 0.035 %, there is a marked decrease in the toughness of the weld. In the present invention, in order to guarantee the toughness of the weld metal, the oxygen content of the weld metal is at most 0.035 %.

The tensile strength and the oxygen content of a weld can be arbitrarily varied by adjusting the composition of the base metal, and the types of welding rod and/or flux which are used for welding.

As stated above, in order to guarantee the toughness of the weld metal of a weld, the oxygen content of the weld metal is made at most 0.035 %. This increases susceptibility to cracking of the weld and may result in the occurrence of delayed hydrogen cracking. Therefore, in the present invention, before carrying out welding from the outer side, the pipe having a weld formed by welding from the inner side is preheated such that at least this weld portion of the pipe is preheated.

For the following reasons, the timing of this preheating is limited to being carried out before welding from the outer side.

The cause of the occurrence of delayed hydrogen cracking in a high strength UOE steel pipe is thought to be that at the time of welding from the outer side, diffusible hydrogen which is incorporated into the weld metal is trapped inside minute cracks in the weld metal formed by welding from the inner side which was reheated by the heat of welding from the outer side. By carrying out preheating prior to welding from the outer side, the cooling time is prolonged and evolution of the diffusible hydrogen can be promoted. If preheating is not carried out, such diffusible hydrogen remains trapped inside the weld metal on the inner side during welding from the outer side, and it may cause delayed hydrogen cracking afterwards.

The preheating temperature is at least 75° C in order to sufficiently cause evolution of diffusible hydrogen and prevent the occurrence of delayed hydrogen cracking with certainty. Preheating heats not only the weld but also the base metal and the heat affected zone. Therefore, if preheating is carried out at a temperature exceeding 250° C, there is the possibility of a deterioration in the toughness of these portions. Accordingly, the preheating temperature is at most 250° C as a temperature which can guarantee an impact energy of at least 84 J in a Charpy impact test at -30° C. Preferably it is 80 - 240° C.

A means for preheating can be any heating means which can heat the weld to a prescribed temperature such as heating with a gas burner or heating with an induction heater, and it is not limited to a specific heating means. Heating can be carried out such that at least the weld is successively heated over its entire length. The heated region in the circumferential direction may extend around the entire periphery of the steel pipe, but it may be limited to a local region including the weld such as a region within 10 mm of the bevel of the weld.

In this manner, according to the present invention, a high strength UOE steel pipe which has a high tensile strength of at least 900 MPa and preferably higher and which has a weld and a heat affected zone both having excellent toughness (Charpy absorbed energy at -30° C of at least 84 J) can be stably manufactured without delayed hydrogen cracking in the weld or fracture at the time of pipe expansion.

The present invention will be more concretely explained while referring to examples.

### Examples

In this example, three types of thick steel plates (Steels A, B, and C) having different compositions as shown in Table 1 were manufactured and tested.

Using each of these steel plates as a starting material, beveling was carried out on both ends of a plate in the widthwise direction, and then working was carried out on the steel plate with a C press, a U press, and an O press to form an open pipe. After tack welding was carried out on the abutting portions of both ends of the open pipe by gas shielded arc welding, a first layer of submerged arc welding was carried out from the inner side, and then one layer of submerged arc welding was carried out from the outer side either immediately or after preheating the weld in a region including both end portions to a predetermined temperature.

A welded steel pipe which was obtained in this manner was subjected to pipe expansion over its entire length with plastic deformation of in the form of 1 % circumferential elongation to manufacture a UOE steel pipe with an outer diameter of 30 inches (762 mm), a wall thickness of 16 mm, and a length of 12 m.

Pipes which experienced fracture of the weld during pipe expansion (Comparative Examples A-1 through A-3, B-1 through B-3, and C-1 through C-3 in Table 1) could not be used as products, so testing of these pipes was stopped at that point.

For the pipes which did not experience fracture of the weld during pipe expansion (Comparative Examples A-4 through A-10, B-4 through B-10, C-4 through C-10, Examples A-1 through A-3, B-1 through B-3, C-1 through C-3), an ultrasonic flaw test was carried out over the entire length of the weld, when 48 hours elapsed after submerged arc welding from the outer side, to ascertain whether delayed hydrogen cracking had occurred. In order to evaluate the toughness of the weld metal of the weld zone and the heat affected zone, a test piece was cut from the UOE steel pipe after pipe expansion and it was subjected to a Charpy impact test at -30° C.

The test results are shown in Tables 2 through 4.

In Tables 2, 3, and 4, Comparative Examples A-1 through A-3, B-1 through B-3, and C-1 through C-3 each had a ratio of the tensile strength of the weld with respect to that of the base metal which was lower than the range prescribed in the present invention, so fracture occurred during pipe expansion. Therefore, subsequent tests were not carried out.

Comparative Examples A-4, B-4, and C-4 did not undergo the preheating which is prescribed by the present invention before welding from the outer side, and for Comparative Examples A-5, B-5, and C-5, the preheating temperature was lower than the range prescribed by the present invention. Therefore, delayed hydrogen cracking developed in the welds after the passage of 48 hours after welding from the outer side.

Comparative Examples A-6, B-6, and C-6 underwent preheating before welding from the outer side, so delayed hydrogen cracking of the weld could be prevented. However, due to the preheating temperature which was above the range prescribed by the present invention, the toughness of the heat affected zone deteriorated.

Comparative Examples A-7, A-8, B-7, B-8, C-7, and C-8 had a ratio of the tensile strength of the weld with respect to that of the base metal which was above the range prescribed by the present invention, so susceptibility to cracking increased, and after welding was carried out from the outer side, delayed hydrogen cracking occurred in the weld after the passage of 48 hours. Particularly in Comparative Examples A-8, B-8, and C-8, delayed hydrogen cracking developed even though preheating was carried out at 250° C before welding from the outer side.

In Comparative Examples A-9, A-10, B-9, B-10, C-9, and C-10, the oxygen content of the weld metal in the weld was above the range prescribed by the present invention, so the toughness of the weld metal deteriorated.

In contrast, for Examples A-1 through A-3, B-1 through B-3, and C-1 through C-3, the tensile strength of the weld was at least 95 % and at most 110 % of the tensile strength of the base metal, so pipe expansion by 1 % was possible. In addition, since preheating at 75 - 250° C was carried out prior to welding from the outer side, delayed hydrogen cracking could be prevented without a deterioration in the toughness of the weld heat affected zone. Furthermore, due to the oxygen content of the weld metal which was suppressed to at most 0.035 %, the toughness of the weld metal could satisfy target values.

**Table 1**

| Steel Compositions (mass %) | | | | | | | | | | | |
|---|---|---|---|---|---|---|---|---|---|---|---|
| Steel Type | C | Si | Mn | P | S | Cu | Ni | Cr | Mo | Nb | V |
| Steel A | 0.04 | 0.09 | 1.63 | 0.006 | 0.001 | 0.28 | 0.62 | 0.29 | 0.40 | 0.018 | 0.032 |
| Steel B | 0.05 | 0.12 | 1.95 | 0.004 | 0.001 | - | 0.50 | 0.25 | 0.30 | 0.014 | 0.020 |
| Steel C | 0.06 | 0.10 | 0.60 | 0.005 | 0.001 | 1.00 | 0.60 | 0.45 | 0.45 | 0.032 | 0.040 |

**Table 2**

| Examples (Steel A) | | | | | | | | | | |
|---|---|---|---|---|---|---|---|---|---|---|
| No. | Tensile strength of base metal (MPa) | Tensile strength of weld (MPa) | Ratio of tensile strength of weld to base metal (weld/base metal) | Oxygen content of weld metal (mass %) | Preheating temperature before outer side welding (°C) (--: no preheating) | Evaluation | | | | Overall evaluation |
| | | | | | | Fracture during pipe expansion (O: success, X: fracture) | Delayed hydrogen cracking of weld (UST after 48 hours) (O: no cracking, X: cracking) | Weld metal toughness (CVN at -30°C) (O: ≥ 84J, X: < 84J) | Toughness of HAZ (CVN at -30°C) (O: ≥ 84J, X: < 84J) | |
| Comp. A-1 | 1010 | 942 | 93% | 0.034 | 160 | X (weld fracture) | No further testing | | | X |
| Comp. A-2 | 1053 | 949 | 90% | 0.033 | 250 | X (weld fracture) | | | | X |
| Comp. A-3 | 1032 | 939 | 91% | 0.031 | 75 | X (weld fracture) | | | | X |
| Comp. A-4 | 951 | 962 | 101% | 0.034 | - | O (1% pipe expansion) | X | O (96 J) | O (165 J) | X |
| Comp. A-5 | 954 | 923 | 97% | 0.029 | 70 | O (1% pipe expansion) | X | O (120 J) | O (140 J) | X |
| Comp. A-6 | 942 | 999 | 106% | 0.028 | 260 | O (1% pipe expansion) | O | O (118 J) | X (80 J) | X |
| Comp. A-7 | 915 | 1020 | 111% | 0.033 | - | O (1% pipe expansion) | X | O (92 J) | O (153 J) | X |
| Comp. A-8 | 920 | 1031 | 112% | 0.034 | 250 | O (1% pipe expansion) | X | O (93 J) | O (89 J) | X |
| Comp. A-9 | 936 | 915 | 98% | 0.037 | - | O (1% pipe expansion) | O | X (79 J) | O (172 J) | X |
| Comp. A-10 | 945 | 960 | 102% | 0.036 | 250 | O (1% pipe expansion) | O | X (81 J) | O (91 J) | X |
| Ex. A-1 | 960 | 980 | 102% | 0.021 | 75 | O (1% pipe expansion) | O | O (112 J) | O (125 J) | O |
| Ex. A-2 | 1010 | 990 | 98% | 0.019 | 160 | O (1% pipe expansion) | O | O (102 J) | O (105 J) | O |
| Ex. A-3 | 983 | 1005 | 102% | 0.034 | 250 | O (1% pipe expansion) | O | O (95 J) | O (92 J) | O |

**Table 3**

| Examples (Steel B) | | | | | | | | | | |
|---|---|---|---|---|---|---|---|---|---|---|
| No. | Tensile strength of base metal (MPa) | Tensile strength of weld (MPa) | Ratio of tensile strength of weld to base metal (weld/bas e metal) | Oxygen content of weld metal (mass %) | Preheating temperature before outer side welding (°C) (--: no preheating) | Evaluation | | | | Overall evaluation |
| | | | | | | Fracture during pipe expansion (O: success, X: fracture) | Delayed hydrogen cracking of weld (UST after 48 hours) (O: no cracking, X: cracking) | Weld metal toughness (CVN at -30°C) (O: ≥ 84J, X: < 84J) | Toughness of HAZ (CVN at -30°C) (O: ≥ 84J, X: < 84J) | |
| Comp. B-1 | 1100 | 939 | 85% | 0.031 | 110 | X (weld fracture) | No further testing | | | X |
| Comp. B-2 | 1092 | 951 | 87% | 0.035 | 190 | X(weld fracture) | | | | X |
| Comp. B-3 | 1041 | 922 | 89% | 0.025 | 80 | X (weld fracture) | | | | X |
| Comp. B-4 | 1030 | 1051 | 102% | 0.030 | - | O (1% pipe expansion) | X | O (90 J) | O (143 J) | X |
| Comp. B-5 | 1093 | 1049 | 96% | 0.027 | 70 | O (1% pipe expansion) | X | O (107 J) | O (121 J) | X |
| Comp. B-6 | 990 | 1000 | 101% | 0.030 | 260 | O (1% pipe expansion) | O | O (120 J) | X (75 J) | X |
| Comp. B-7 | 941 | 1063 | 113% | 0.031 | - | O (1% pipe expansion) | X | O (89 J) | O (139 J) | X |
| Comp. B-8 | 984 | 1092 | 111% | 0.025 | 250 | O (1% pipe expansion) | X | O (99 J) | O (96 J) | X |
| Comp. B-9 | 1022 | 1012 | 99% | 0.038 | - | O (1% pipe expansion) | O | X (70 J) | O (139 J) | X |
| Comp. B-10 | 955 | 993 | 104% | 0.039 | 250 | O (1% pipe expansion) | O | X (77 J) | O (93 J) | X |
| Ex. B-1 | 1010 | 1015 | 100% | 0.030 | 240 | O (1% pipe expansion) | O | O (91 J) | O (108 J) | O |
| Ex. B-2 | 920 | 980 | 107% | 0.015 | 80 | O (1% pipe expansion) | O | O (119 J) | O (115 J) | O |
| Ex. B-3 | 1062 | 1019 | 96% | 0.021 | 190 | O (1% pipe expansion) | O | O (99 J) | O (97 J) | O |

**Table 4**

| Examples (Steel C) | | | | | | | | | | |
|---|---|---|---|---|---|---|---|---|---|---|
| No. | Tensile strength of base metal (MPa) | Tensile strength of weld (MPa) | Ratio of tensile strength of weld to base metal (weld/base metal) | Oxygen content of weld metal (mass %) | Preheating temperature before outer side welding (°C) (--: no preheating) | Evaluation | | | | Overall evaluation |
| | | | | | | Fracture during pipe expansion (O: success, X: fracture) | Delayed hydrogen cracking of weld (UST after 48 hours) (O: no cracking, X: cracking) | Weld metal toughness (CVN at -30°C) (O: ≥ 84J, X: < 84J) | Toughness of HAZ (CVN at -30°C) (O: ≥ 84J, X: < 84J) | |
| Comp. C-1 | 990 | 911 | 92% | 0.030 | 120 | X (weld fracture) | No further testing | | | X |
| Comp. C-2 | 965 | 907 | 94% | 0.029 | 76 | X (weld fracture) | | | | X |
| Comp. C-3 | 980 | 921 | 94% | 0.033 | 210 | X (weld fracture) | | | | X |
| Comp. C-4 | 922 | 950 | 103% | 0.035 | - | O (1% pipe expansion) | X | O (89 J) | O (170 J) | X |
| Comp. C-5 | 914 | 960 | 105% | 0.026 | 68 | O (1% pipe expansion) | X | O (111 J) | O (130 J) | X |
| Comp. C-6 | 945 | 936 | 99% | 0.031 | 260 | O (1% pipe expansion) | O | O (103 J) | X (82 J) | X |
| Comp. C-7 | 978 | 1095 | 112% | 0.029 | - | O (1% pipe expansion) | X | O (115 J) | O (165 J) | X |
| Comp. C-8 | 940 | 1062 | 113% | 0.030 | 250 | O (1% pipe expansion) | X | O (98 J) | O (93 J) | X |
| Comp. C-9 | 955 | 917 | 96% | 0.038 | - | O (1% pipe expansion) | O | X (75 J) | O (160 J) | X |
| Comp. C-10 | 969 | 1017 | 105% | 0.037 | 190 | O (1% pipe expansion) | O | X (79 J) | O (100 J) | X |
| Ex. C-1 | 935 | 1019 | 109% | 0.024 | 80 | O (1% pipe expansion) | O | O (118 J) | O (132 J) | O |
| Ex. C-2 | 1003 | 993 | 99% | 0.018 | 183 | O (1% pipe expansion) | O | O (121 J) | O (111 J) | O |
| Ex. C-3 | 975 | 1014 | 104% | 0.032 | 244 | O (1% pipe expansion) | O | O (92 J) | O (98 J) | O |

## Claims

1. A method of manufacturing a UOE steel pipe comprising press forming a base metal steel plate to form an open pipe, welding the abutting end portions of the resulting open pipe from the inner side and then from the outer side, and then carrying out pipe expansion on the resulting welded pipe,
**characterized in that** a steel plate having a tensile strength of at least 900 MPa is used as the base metal steel plate, the welding from the outer side is carried out after preheating the weld obtained by the welding from the inner side to a temperature of 75 - 250° C, the weld obtained by welding from the inner and outer sides has a tensile strength which is in the range of 95 - 110 % of the tensile strength of the base metal and an oxygen content of at most 0.035 mass %.

2. A UOE steel pipe manufactured by a method as set forth in claim 1 **characterized in that** the tensile strength of the base metal is at least 900 MPa, the tensile strength of the weld is in the range of 95 - 110 % of the tensile strength of the base metal, and the oxygen content of the weld is at most 0.035 mass %.
